# EUROPEAN PATENT APPLICATION

(11) **EP 4 694 447 A1**
(43) Date of publication of application: **11.02.2026**
(21) Application number: 23929133.9
(22) Date of filing: 27.03.2023
(51) Int. Cl.: H04W 72/0446

(54) **MEASUREMENT METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2023/084161
(87) International publication number: WO 2024/197532

(57) **Abstract**

Embodiments of the present disclosure provide a measurement method and apparatus, a communication device, and a storage medium. The measurement method is executed by a UE, and comprises: executing a GNSS measurement related operation within a first duration on the basis of expiration of the validity period of obtained location information.

## Description

### TECHNICAL FIELD

The present disclosure relates to, but is not limited to, the field of wireless communication technology, and specifically to a measurement method and apparatus, a communication device and a storage medium.

### BACKGROUND

**In** the field of wireless communication technology, satellite communication is considered to be an important aspect of the future development of wireless communication technology. In a scenario of the satellite communication, after a user equipment (UE) obtains a measurement result of a satellite, the measurement result will be sent to a network device within a validity duration; when the validity duration expires, the UE will enter an idle state, which will cause service interruption or other situations.

### SUMMARY

Accordingly, embodiments of the present disclosure provide a measurement method and apparatus, a communication device and a storage medium.

According to a first aspect of the embodiments of the present disclosure, a measurement method is provided and performed by a user equipment (UE), including:
performing a global navigation satellite system (GNSS) measurement related operation within a first time period based on expiration of a validity duration of acquired location information.

In some embodiments, performing the GNSS measurement related operation within the first time period comprises:
starting a measurement duration; and
performing the GNSS measurement related operation before an end time of the measurement duration.

In some embodiments, starting the measurement duration comprises one of:
starting a timer; or
starting a measurement window.

In some embodiments, performing the GNSS measurement related operation comprises at least one of:
performing a GNSS measurement operation;
not performing uplink data transmission or downlink data transmission; or
not performing a measurement operation other than a GNSS measurement operation.

In some embodiments, performing the GNSS measurement related operation within the first time period comprises: starting the measurement duration based on a predefined mode.

In some embodiments, the method comprises: receiving configuration information sent by a network device, wherein the configuration information indicates the expiration of the validity duration and starting of the measurement duration;
wherein starting the measurement duration comprises: starting the measurement duration based on the configuration information.

In some embodiments, the method comprises: determining a start time of the measurement duration.

In some embodiments, the start time is one of:
an end time of the validity duration; or
a predetermined time after an end time of the validity duration.

In some embodiments, the predetermined time comprises one of:
a second time period;
at least one time slot; or
at least one symbol.

In some embodiments, determining the start time of the measurement duration comprises one of:
determining the start time of the measurement duration based on a predefined mode; or
determining the start time of the measurement duration based on first indication information sent by a network device, wherein the first indication information indicates the start time of the measurement duration.

In some embodiments, the first indication information is carried in the configuration information for transmission, or the first indication information and the configuration information are transmitted separately, or the first indication information is carried in a first signaling for transmission.

In some embodiments, the configuration information further comprises second indication information for indicating the predetermined time.

In some embodiments, the method comprises: receiving a first signaling sent by a network device, wherein the first signaling is used to determine the predetermined time.

In some embodiments, the first signaling further comprises second indication information for indicating the predetermined time.

In some embodiments, the method comprises: receiving a first signaling sent by a network device, wherein the first signaling is a second signaling used for the GNSS measurement related operation;
wherein determining the start time of the measurement duration comprises: determining the start time based on a time-domain resource position for sending the second signaling.

In some embodiments, the first signaling comprises one of: a radio resource control (RRC) signaling, a media access control control element (MAC CE) signaling, or downlink control information (DCI);
and/or the second signaling comprises one of: an RRC signaling, a MAC CE signaling, or DCI.

In some embodiments, the method comprises: determining a validity period of a measurement duration.

In some embodiments, determining the validity period of the measurement duration comprises one of:
determining the validity period of the measurement duration based on a predefined mode;
determining the validity period of the measurement duration based on third indication information sent by a network device;
determining the validity period of the measurement duration based on a third signaling sent by a network device, wherein the third signaling indicates one time length or one time length set, the time length set comprises at least one time length; or
determining the validity period of the measurement duration based on a GNSS duration reported by the UE.

In some embodiments, the third indication information is carried in the configuration information for transmission, or the third indication information and the configuration information are transmitted separately.

In some embodiments, the method comprises: receiving a fourth signaling sent by the network device, wherein the fourth signaling indicates one time length in the time length set;
wherein determining the validity period of the measurement duration comprises: determining the validity period based on the time length indicated by the fourth signaling.

In some embodiments, the method comprises one of:
determining that the UE remains in an RRC connected state based on acquisition of GNSS information before an end time of a measurement duration; or
determining that the UE is in an RRC idle state based on a failure to acquire GNSS information before an end time of a measurement duration.

According to a second aspect of the embodiments of the present disclosure, a measurement method is provided and performed by a network device, including:
sending configuration information to a user equipment (UE), in which the configuration information instructs the UE to perform a global navigation satellite system (GNSS) measurement related operation within a first time period based on expiration of a validity duration of acquired location information.

In some embodiments, the method comprises: sending first indication information to the UE, wherein the first indication information indicates a start time of a measurement duration.

In some embodiments, the first indication information is carried in the configuration information for transmission, or the first indication information and the configuration information are transmitted separately, or the first indication information is carried in a first signaling for transmission.

In some embodiments, the configuration information further comprises second indication information for indicating a predetermined time.

In some embodiments, the method comprises: sending a first signaling to the UE, wherein the first signaling is used to determine a predetermined time.

In some embodiments, the first signaling further comprises second indication information for indicating the predetermined time.

In some embodiments, the method comprises: sending a first signaling to the UE, wherein the first signaling is a second signaling used for the GNSS measurement related operation, the second signaling is used for the UE to determine a start time based on a time-domain resource position for receiving the second signaling.

In some embodiments, the predetermined time comprises one of:
a second time period;
at least one time slot; or
at least one symbol.

In some embodiments, the first signaling comprises one of: a radio resource control (RRC) signaling, a media access control control element (MAC CE) signaling, or downlink control information (DCI);
and/or the second signaling comprises one of: an RRC signaling, a MAC CE signaling, or DCI.

In some embodiments, the method comprises: sending third indication information to the UE, wherein the third indication information indicates a validity period of a measurement duration.

In some embodiments, the third indication information is carried in the configuration information for transmission, or the third indication information and the configuration information are transmitted separately.

In some embodiments, the method comprises: sending a third signaling to the UE, wherein the third signaling indicates one time length, the time length is used for the UE to determine a validity period of a measurement duration.

In some embodiments, the method comprises: sending a third signaling to the UE, wherein the third signaling indicates one time length set, the time length set comprises a plurality of time lengths; and
sending a fourth signaling to the UE, wherein the fourth signaling indicates one time length in the time length set, and the time length indicated by the fourth signaling is used for the UE to determine a validity period of a measurement duration.

According to a third aspect of the embodiments of the present disclosure, a measurement apparatus is provided, including:
a processing module, configured to perform a global navigation satellite system (GNSS) measurement related operation within a first time period based on expiration of a validity duration of acquired location information.

In some embodiments, starting the measurement duration comprises one of:
starting a timer; or
starting a measurement window.

In some embodiments, the processing module is configured to perform at least one of:
performing a GNSS measurement operation;
not performing uplink data transmission or downlink data transmission; or
not performing a measurement operation other than a GNSS measurement operation.

**In** some embodiments, the processing module is configured to start the measurement duration based on a predefined mode.

In some embodiments, the apparatus comprises a receiving module configured to: receive configuration information sent by a network device, wherein the configuration information indicates the expiration of the validity duration and starting of the measurement duration;
wherein the processing module is configured to start the measurement duration based on the configuration information.

In some embodiments, the processing module is configured to determine a start time of the measurement duration.

In some embodiments, the start time is one of:
an end time of the validity duration; or
a predetermined time after an end time of the validity duration.

In some embodiments, the predetermined time comprises one of:
a second time period;
at least one time slot; or
at least one symbol.

In some embodiments, the processing module is configured to perform one of:
determining the start time of the measurement duration based on a predefined mode; or
determining the start time of the measurement duration based on first indication information sent by a network device, wherein the first indication information indicates the start time of the measurement duration.

In some embodiments, the first indication information is carried in the configuration information for transmission, or the first indication information and the configuration information are transmitted separately, or the first indication information is carried in a first signaling for transmission.

In some embodiments, the configuration information further comprises second indication information for indicating the predetermined time.

In some embodiments, the receiving module is configured to: receive a first signaling sent by a network device, wherein the first signaling is used to determine the predetermined time.

In some embodiments, the first signaling further comprises second indication information for indicating the predetermined time.

In some embodiments, the sending module is configured to: receive a first signaling sent by a network device, wherein the first signaling is a second signaling used for the GNSS measurement related operation; wherein the processing module is configured to: determine the start time based on a time-domain resource position for sending the second signaling.

In some embodiments, the first signaling comprises one of: an RRC signaling, a MAC CE signaling, or DCI; and/or the second signaling comprises one of: an RRC signaling, a MAC CE signaling, or DCI.

In some embodiments, the processing module is configured to determine a validity period of a measurement duration.

In some embodiments, the processing module is configured to perform one of:
determining the validity period of the measurement duration based on a predefined mode;
determining the validity period of the measurement duration based on third indication information sent by a network device;
determining the validity period of the measurement duration based on a third signaling sent by a network device, wherein the third signaling indicates one time length or one time length set, the time length set comprises at least one time length; or
determining the validity period of the measurement duration based on a GNSS duration reported by the UE.

In some embodiments, the third indication information is carried in the configuration information for transmission, or the third indication information and the configuration information are transmitted separately.

In some embodiments, the receiving module is configured to: receive a fourth signaling sent by the network device, wherein the fourth signaling indicates one time length in the time length set;
the processing module is configured to: determine the validity period based on the time length indicated by the fourth signaling.

In some embodiments, the processing module is configured to perform one of:
determining that the UE remains in an RRC connected state based on acquisition of GNSS information before an end time of a measurement duration; or
determining that the UE is in an RRC idle state based on a failure to acquire GNSS information before an end time of a measurement duration.

According to a fourth aspect of the embodiments of the present disclosure, a measurement apparatus is provided, including:
a sending module, configured to send configuration information to a user equipment (UE), in which the configuration information instructs the UE to perform a global navigation satellite system (GNSS) measurement related operation within a first time period based on expiration of a validity duration of acquired location information.

In some embodiments, starting the measurement duration comprises one of:
starting a timer; or
starting a measurement window.

**In** some embodiments, performing the GNSS measurement related operation comprises at least one of:
performing a GNSS measurement operation;
not performing uplink data transmission or downlink data transmission; or
not performing a measurement operation other than a GNSS measurement operation.

In some embodiments, the sending module is configured to: send first indication information to the UE, wherein the first indication information indicates a start time of a measurement duration.

In some embodiments, the first indication information is carried in the configuration information for transmission, or the first indication information and the configuration information are transmitted separately, or the first indication information is carried in a first signaling for transmission.

**In** some embodiments, the configuration information further comprises second indication information for indicating a predetermined time.

In some embodiments, the sending module is configured to: send a first signaling to the UE, wherein the first signaling is used to determine a predetermined time.

**In** some embodiments, the first signaling further comprises second indication information for indicating the predetermined time.

In some embodiments, the sending module is configured to: send a first signaling to the UE, wherein the first signaling is a second signaling used for the GNSS measurement related operation, the second signaling is used for the UE to determine a start time based on a time-domain resource position for receiving the second signaling.

In some embodiments, the predetermined time comprises one of:
a second time period;
at least one time slot; or
at least one symbol.

In some embodiments, the first signaling comprises one of: an RRC signaling, a MAC CE signaling, or DCI; and/or the second signaling comprises one of: an RRC signaling, a MAC CE signaling, or DCI.

In some embodiments, the sending module is configured to: send third indication information to the UE, wherein the third indication information indicates a validity period of a measurement duration.

In some embodiments, the third indication information is carried in the configuration information for transmission, or the third indication information and the configuration information are transmitted separately.

In some embodiments, the sending module is configured to: send a third signaling to the UE, wherein the third signaling indicates one time length, the time length is used for the UE to determine a validity period of a measurement duration.

In some embodiments, the sending module is configured to: send a third signaling to the UE, wherein the third signaling indicates one time length set, the time length set comprises a plurality of time lengths; and
send a fourth signaling to the UE, wherein the fourth signaling indicates one time length in the time length set, and the time length indicated by the fourth signaling is used for the UE to determine a validity period of a measurement duration.

According to a fifth aspect of the embodiments of the present disclosure, a measurement system is provided, including a user equipment (UE) and a network device.

The network device is configured to send configuration information to the UE, wherein the configuration information instructs the UE to perform a global navigation satellite system (GNSS) measurement related operation within a first time period based on expiration of a validity duration of acquired location information.

The UE is configured to perform the GNSS measurement related operation within the first time period based on expiration of the validity duration of the acquired location information.

According to a sixth aspect of the embodiments of the present disclosure, a communication device is provided, including: a processor, a transceiver, a memory, and an executable program stored on the memory and executable by the processor. The processor is configured to perform the measurement method of the embodiments of the first aspect or the second aspect when executing the executable program.

According to a seventh aspect of the embodiments of the present disclosure, a computer storage medium for storing an executable program is provided. When the executable program is executed by a processor, the measurement method of the embodiments of the first aspect or the second aspect is implemented.

The technical solution provided by the embodiments of the present disclosure may have the following beneficial effects.

**In** the embodiments of the present disclosure, the UE performs the GNSS measurement related operation within the first time period based on the expiration of the validity duration of the acquired location information. In this way, the UE can perform GNSS measurement operation without receiving a trigger command of performing the GNSS measurement operation, so that the UE does not need to enter an RRC idle state after the expiration of the validity duration, which is beneficial to reduce the occurrence of unnecessary service interruptions of the UE.

The technical solutions provided by the embodiments of the present disclosure should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure, and serve to explain the principle of the embodiments of the present disclosure together with the specification.
FIG. 1 is a schematic diagram of a wireless communication system according to an embodiment of the present disclosure;
FIG. 2 is a flowchart of a measurement method according to an embodiment of the present disclosure;
FIG. 3 is a flowchart of a measurement method according to an embodiment of the present disclosure;
FIG. 4 is a flowchart of a measurement method according to an embodiment of the present disclosure;
FIG. 5 is a flowchart of a measurement method according to an embodiment of the present disclosure;
FIG. 6 is a schematic diagram of a determined start time of a measurement duration according to an embodiment of the present disclosure;
FIG. 7 is a schematic diagram of a determined start time of a measurement duration according to an embodiment of the present disclosure;
FIG. 8 is a flowchart of a measurement method according to an embodiment of the present disclosure;
FIG. 9 is a flowchart of a measurement method according to an embodiment of the present disclosure;
FIG. 10 is a flowchart of a measurement method according to an embodiment of the present disclosure;
FIG. 11 is a block diagram of a measurement apparatus according to an embodiment of the present disclosure;
FIG. 12 is a block diagram of a measurement apparatus according to an embodiment of the present disclosure;
FIG. 13 is a block diagram of a user equipment (UE) according to an embodiment of the present disclosure; and
FIG. 14 is a block diagram of a communication device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure.

The terms used in the embodiments of the present disclosure are solely for the purpose of describing a particular embodiment and are not intended to limit the embodiments of the present disclosure. The terms "a", "an", "this", "the", "above", "aforementioned" and "said" in the singular form used in the embodiments and claims of the disclosure are also intended to include the plural form, unless the context clearly indicates other meaning. It should also be understood that the term "and/or" as used herein refers to any or all possible combinations of one or more associated listed items. In the embodiments of the present disclosure, "multiple" refers to two or more. The prefixes such as "first" and "second" in the embodiments of the present disclosure are only used to distinguish different descriptive objects, and do not constitute restrictions on the position, order, priority, quantity or content of the descriptive objects. The statement of the descriptive object refers to the description in the context of the claims or embodiments, and should not constitute redundant restrictions due to the use of prefix numerals. For example, "first", "second", "third", etc. are used to describe various information, but the information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining". In some embodiments, the names of information and the like are not limited to the names described in the embodiments, and the terms "information", "message", "signaling", "report", "instruction", "configuration", "data" and the like may be interchangeable.

In some embodiments of the present disclosure, "obtain", "acquire", "get", "receive", and "transmit (send and/or receive)" are interchangeable, which can be interpreted as receiving from other entities, obtaining from a protocol, obtaining by self-processing, and other meanings.

In some embodiments of the present disclosure, "send", "report", "issue", and "transmit (send and/or receive)" can be interchangeable.

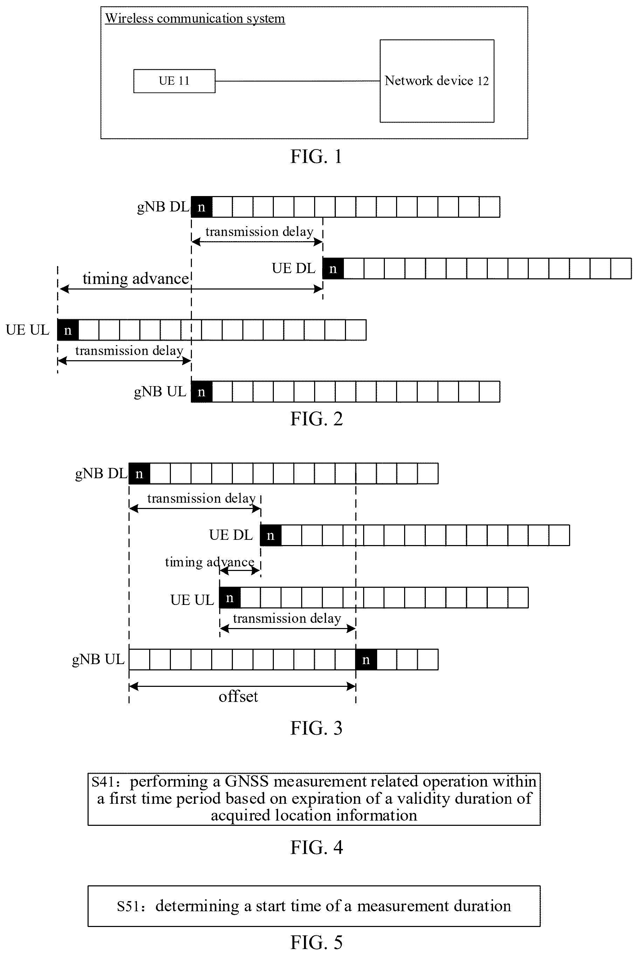

Please refer to FIG. 1, which is a schematic diagram of a wireless communication system according to an embodiment of the present disclosure. As illustrated in FIG. 1, the wireless communication system is a communication system based on the cellular mobile communication technology, and the wireless communication system may include several UEs 11, and several network devices 12.

The UE 11 may be a device that provides voice and/or data connectivity to users. The UE 11 may communicate with one or more core networks via a radio access network (RAN). The UE 11 may be an Internet of Things (IoT) UE, such as a sensor device, a mobile phone (or a "cellular" phone), and a computer with an IoT UE. For example, the UE may be a fixed, portable, pocket-sized, handheld, computer-built-in or vehicle-mounted device. For example, the UE may be a station (STA), a subscriber unit, a subscriber station, a mobile station, a mobile, a remote station, an access point, a remote terminal, an access terminal, a user terminal, a user agent, a user device, or a user equipment (UE). Or, the UE 11 may also be a device of an unmanned aerial vehicle (UAV). Or, the UE 11 may also be a vehicle-mounted device, for example, the UE may be a driving computer with a wireless communication function, or a wireless communication device externally connected to the driving computer. Or, the UE 11 may also be a roadside device, for example, a street lamp, a signal lamp or other roadside devices with a wireless communication function.

The network device 12 may be a network side device in the wireless communication system. Optionally, the network device may be an access device in an access network. Or, the wireless communication system may be a fourth-generation mobile communication (4G) system, also known as a long-term evolution (LTE) system; or the wireless communication system may be a 5G system, also known as a new radio (NR) system or a 5G NR system. Or, the wireless communication system may be a next generation system of the 5G system. The access network in the 5G system may be referred to as new generation-radio access network (NG-RAN). Or, the wireless communication system may be a machine type communication (MTC) system.

The network device 12 may be an evolved access device (eNB) adopted in the 4G system. Or, the network device 12 may also be a base station (gNB) adopting a centralized distributed architecture in the 5G system. When the network device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the network device 12 is not limited in the embodiments of the present disclosure.

A wireless connection may be established between the network device 12 and the UE 11 via a wireless air interface. In different implementations, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new radio interface; or the wireless air interface may also be a wireless air interface based on a next generation mobile communication network technology standard of the 5G standard.

In some embodiments, the emergence of new Internet applications such as a new generation of augmented reality (AR) or virtual reality (VR) has put forward higher requirements for the wireless communication technology, driving continuous evolution of the wireless communication technology to meet the requirements of applications. At present, the cellular mobile communication technology is in the evolution stage of a new generation of technology. An important feature of the new generation of technology is to support flexible configuration of multiple service types. Since different service types have different requirements for the wireless communication technology, for example, the requirement of the enhanced mobile broad band (eMBB) service type mainly focuses on large bandwidth and high rate; the requirement of the ultra reliable low latency communication (URLLC) service type mainly focuses on high reliability and low latency; the requirement of the massive machine type communication (mMTC) service type mainly focuses on big data. Therefore, the new generation of wireless communication systems requires flexible and configurable designs to support transmission of multiple service types.

In the research of the wireless communication technology, satellite communication is considered to be an important aspect of the future development of the wireless communication technology. Satellite communication refers to communication conducted by a radio communication device on the ground using a satellite as a relay. The satellite communication system consists of a satellite part and a ground part. Characteristics of the satellite communication can be described below: a large communication range; communication can be carried out between any two points as long as they are within a range covered by radio waves emitted by the satellite; and it is not easily affected by land disasters (high reliability). As a supplement to the current ground cellular communication system, the satellite communication can have the following benefits.

Extended coverage: for areas that cannot be covered by the current cellular communication system or are costly to cover, such as oceans, deserts, remote mountainous areas, etc., the satellite communications can be used to solve communication problems.

Emergency communication: when cellular communication infrastructures are unavailable in extreme situations such as earthquakes or other disasters, the satellite communications can be used to quickly establish communications connections.

Provide industry applications: for example, for delay-sensitive services in long-distance transmission, the satellite communications can be used to reduce the delay of service transmission.

It is foreseeable that in future wireless communication systems, satellite communication systems and terrestrial cellular communication systems will gradually achieve deep integration, truly realizing the intelligent connection of all things. However, due to a highspeed movement of the satellite, the reliability of data interaction in the satellite communication scenario cannot be effectively achieved.

In the satellite communication scenario, due to a long signal transmission distance between a transmitter and a receiver, the data transmission has an arrival time. For transmissions with an uplink and downlink relationship, in some embodiments, an offset (Koffset) parameter is introduced to compensate for the transmission delay. As shown in FIG. 2, uplink transmission (gNB UL) and downlink transmission (gNB DL) of a base station (gNB) are time-aligned, that is, frames marked as n in gNB UL and gNB DL in FIG. 2 are aligned; and referring to FIG. 2, there is a transmission delay (Delay) between the gNB UL and the UE's downlink transmission (UE DL); the UE's uplink transmission timing advance (TA) needs to take into account the transmission delay from the UE to the satellite, so that the uplink transmissions of different UEs may reach the gNB within a predetermined time range.

As shown in FIG. 3, the uplink transmission and the downlink transmission of the gNB are not aligned, that is, frames marked as n in gNB UL and gNB DL in FIG. 3 are not aligned, and there is an offset in the time domain (gNB DL-UL frame timing shift); there is a transmission delay (Delay) between the downlink transmission of gNB (gNB DL) and the downlink transmission of UE (UE DL). Similarly, the UE's uplink transmission timing advance (TA) needs to take into account the transmission delay from the terminal to the satellite, so that the uplink transmissions of different UEs may reach the gNB within a predetermined time range. In the embodiments, the timing offset in the time domain (gNB DL-UL frame timing shift) between the uplink transmission and the downlink transmission of the gNB is taken into account when considering the timing advance.

In some embodiments, Koffset may be applied in multiple operations. For example, Koffset may be applied in at least one operation of DCI-scheduled physical uplink shared channel (PUSCH) transmission, hybrid automatic repeat request (HARQ) feedback information transmission, and MAC control element (CE) transmission.

In some embodiments, a terminal needs to obtain location information to determine a timing compensation of the uplink transmission. The UE may determine its own location information through a GNSS measurement module. Optionally, for an IoT terminal, the cellular module and the GNSS module are not currently supported to work simultaneously; for example, in the Rel-17 version, the terminal only supports sporadic transmission.

In some embodiments, after the terminal obtains a GNSS measurement result, a reliable time of GNSS may be reported to the base station through a GNSS validity duration. Optionally, when the GNSS validity duration of the terminal expires, the terminal will enter an IDLE state. Optionally, the behavior that the terminal enters the IDLE state to reacquire GNSS will cause a delay in data transmission. After the GNSS validity duration expires, how to avoid the terminal from entering the IDLE state and maintain data transmission need to be clarified.

Optionally, the aforementioned terminal may be a UE.

As shown in FIG. 4, an embodiment of the present disclosure provides a measurement method. The method is performed by a UE, and includes the following steps.

At step S41, a GNSS measurement related operation is performed within a first time period based on expiration of a validity duration of acquired location information.

In the embodiments of the present disclosure, the UE may be the UE in the aforementioned embodiments; the UE may also be, but not limited to, various mobile terminals or fixed terminals. For example, the UE may be at least one of: a mobile phone, a computer, a server, a wearable device, a game control platform, or a multimedia device, etc. For another example, the UE may be at least one of: a fixed, portable, pocket-sized, handheld, computer-built-in, or vehicle-mounted device. For another example, the UE may be at least one of: an unmanned aerial vehicle device, a vehicle-mounted device, an Internet of Things device, a street lamp, a signal lamp, or other roadside device with a wireless communication function, and a driving computer with a wireless communication function or a wireless communication device connected to an external driving computer.

In some embodiments, performing the GNSS measurement related operation within the first time period includes: starting a measurement duration; and performing the GNSS measurement related operation before an end time of the measurement duration.

An embodiment of the present disclosure provides a measurement method, performed by a UE, including: starting a measurement duration based on expiration of a validity duration of acquired location information; and performing the GNSS measurement related operation before an end time of the measurement duration.

An embodiment of the present disclosure provides a measurement method, performed by a UE, including: starting a measurement duration based on expiration of a validity duration; and performing the GNSS measurement related operation before an end time of the measurement duration.

Optionally, "based on the expiration of the validity duration" may be based on the expiration of the validity duration of the acquired location information. Optionally, the location information may be location information of the UE.

Optionally, "based on the expiration of the validity duration of the acquired location information" may be that a validity duration of the location information acquired based on GNSS expires, or a validity duration of a measurement result acquired based on GNSS expires. Optionally, the measurement result at least includes the location information.

Optionally, "based on the expiration of the validity duration of the acquired location information" may be based on expiration of a validity duration of the location information acquired in satellite communication.

In some embodiments, the measurement duration may be a timing duration. Optionally, the timing duration may be a duration during which the UE is in a wake-up state or a duration during which the UE is in an RRC connected state.

In some embodiments, step S41 may include: controlling the UE not to be in an RRC idle state in a case where the validity duration of the location information acquired based on GNSS expires, i.e., when the UE is in the RRC connected state or an RRC inactive state.

In some embodiments, the validity duration of the location information acquired based on GNSS may be a GNSS validity duration.

In some embodiments, starting the measurement duration includes one of:
starting a timer; or
starting a measurement window.

In some embodiments of the present disclosure, a network device may be the network device in the aforementioned embodiments; the network device may be a base station or a network element having some functions of a base station or a network element having network element functions, etc. For example, the base station may be at least one of: a 3G base station, a 4G base station, a 5G base station, and other evolved base stations.

In some embodiments, performing the GNSS measurement related operation includes at least one of:
performing a GNSS measurement operation;
not performing uplink data transmission or downlink data transmission; or
not performing a measurement operation other than a GNSS measurement operation.

In an embodiment of the present disclosure, the UE performs the GNSS measurement related operation within the first time period based on the expiration of the validity duration of the acquired location information, which allows the UE to perform the GNSS measurement operation without receiving a trigger command of performing the GNSS measurement operation, so that the UE does not need to enter the RRC idle state after the expiration of the validity duration, thereby helping to reduce unnecessary service interruptions and/or power consumption of the UE.

Further, in the embodiments of the present disclosure, the measurement duration for measuring GNSS measurement-related operation may be started by starting a timer or starting a measurement window, thereby flexibly starting the measurement duration.

Further, in the embodiments of the present disclosure, performing the GNSS measurement related operation may refer to not performing uplink/downlink data transmission and/or not performing a measurement operation other than the GNSS measurement operation, which can further save power on one hand and facilitate efficient completion of the GNSS measurement operation on the other hand.

In some embodiments, the GNSS related operation may be performed within the first time period based on a predefined mode or a mode preconfigured by the network device.

An embodiment of the present disclosure provides a measurement method, performed by a UE, including: performing a GNSS related operation within a first time period based on a predefined mode and based on a validity duration of location information acquired by GNSS. For example, the UE and the network device may predefine or the communication protocol may predefine that the UE performs the GNSS measurement related operation within the first time period based on expiration of the validity duration of the location information acquired by GNSS.

An embodiment of the present disclosure provides a measurement method, performed by a UE, including:
receiving configuration information sent by a network device, in which the configuration information instructs the UE to perform the GNSS measurement related operation within the first time period based on the expiration of the validity duration of the location information acquired by GNSS; and
performing the GNSS measurement related operation within the first time period based on the configuration information.

In some embodiments, starting the timer or starting the measurement window may be determined in a predefined mode, or starting the timer or starting the measurement window may be determined based on a pre-configuration of the network device.

In some embodiments, starting the measurement duration includes: starting the measurement duration based on a predefined mode.

An embodiment of the present disclosure provides a measurement method, performed by a UE, including: starting the measurement duration based on a predefined mode.

For example, the UE and the network device may predefine that: the UE starts the measurement duration based on the expiration of the validity duration of the location information acquired by GNSS; or the communication protocol may predefine that: the UE starts the measurement duration based on the expiration of the validity duration of the location information acquired by GNSS. In this way, the UE may start the measurement duration when the validity duration expires.

In some embodiments, the method includes: receiving configuration information sent by a network device, in which the configuration information indicates starting of the measurement duration based on the expiration of the validity duration.

Starting the measurement duration includes starting the measurement duration based on the configuration information.

An embodiment of the present disclosure provides a measurement method, performed by a UE, including:
receiving configuration information sent by a network device, in which the configuration information instructs the UE to start the measurement duration based on the expiration of the validity duration of the acquired location information; and
starting the measurement duration based on the configuration information.

In the embodiments of the present disclosure, the UE may start the measurement duration based on the expiration of the validity duration of the acquired location information through a predefined mode or a preconfigured mode of the network device. In this way, the measurement duration may be flexibly started to adapt to more application scenarios.

It should be noted that those skilled in the art can understand that the method provided in the embodiments of the present disclosure may be executed alone or together with some methods in the embodiments of the present disclosure or some methods in related technologies.

As shown in FIG. 5, an embodiment of the present disclosure provides a measurement method. The method is performed by a UE, and includes the following steps.

At step S51, a start time of a measurement duration is determined.

In some embodiments of the present disclosure, the measurement duration may be the measurement duration in the above embodiments, and the validity duration may be the validity duration in the above embodiments. For example, the validity duration may be the GNSS validity duration.

In some embodiments, the start time may be one of:
an end time of the validity duration; or
a predetermined time after an end time of the validity duration.

An embodiment of the present disclosure provides a measurement method, performed by a UE, including: determining the start time of the measurement duration to be the end time of the validity duration.

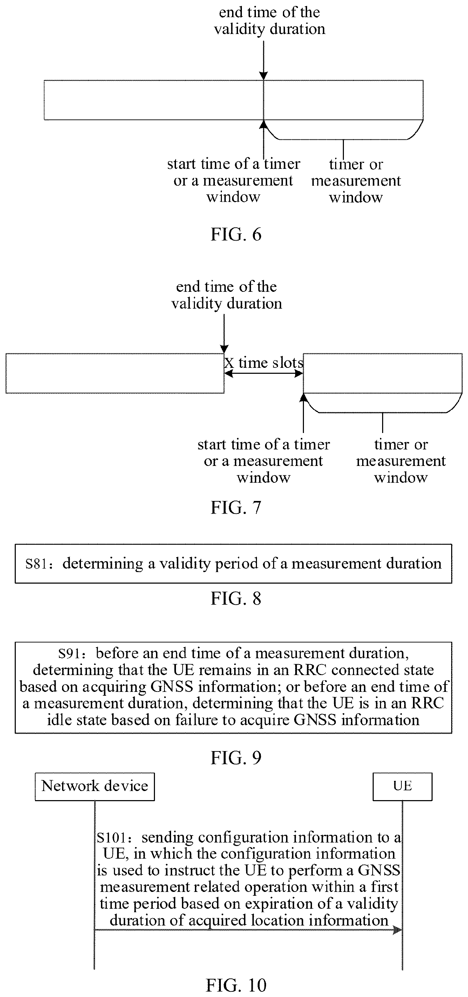

For example, the UE determines the start time of the measurement duration based on the end time of the validity duration. For example, as shown in FIG. 6, the end time of the validity duration may be the start time of the measurement duration. Optionally, the start time of the measurement duration is a start time of a timer or a measurement window. For example, a difference between the end time of the validity duration and the start time of the measurement duration is within a predetermined time range. For example, the start time of the measurement duration is 0.5ms before the end time of the validity duration.

In this embodiment of the present disclosure, if the start time of the measurement duration is determined to be the end time of the validity duration, the UE may directly start the timer or start the measurement duration after the validity duration expires, thereby reducing the occurrence of service interruption of the UE.

An embodiment of the present disclosure provides a measurement method, performed by a UE, including: determining the start time of the measurement duration to be the predetermined time after the end time of the validity duration.

In some embodiments, the predetermined time includes one of: a second duration, at least one time slot, or at least one symbol. In the embodiments of the present disclosure, the predetermined time may be an absolute time, such as 4 ms, or a logical time, such as 4 time slots or 10 symbols.

For example, the UE determines the start time of the measurement duration based on the end time of the validity duration and the predetermined time. For example, the predetermined time is X time slots. As shown in FIG. 7, the time after X time slots after the end time of the validity duration is the start time of the measurement duration; optionally, the start time of the measurement duration is the start time of a timer or a measurement window.

In the embodiments of the present disclosure, the UE can accurately determine the start time of the measurement duration, so that the UE can accurately start the timer or measurement window at that time. For example, the UE may directly start the timer or measurement window after the validity duration of the location information acquired by GNSS expires, which may greatly reduce the occurrence of service interruption of the UE. For another example, the UE may start the timer or measurement window after a predetermined time after the validity duration of the location information acquired by GNSS expires, which may also reduce the occurrence of service interruption of the UE to a certain extent.

In some embodiments, step S51 includes one of:
determining the start time of the measurement duration based on a predefined mode; or
based on first indication information sent by a network device, determining the start time of the measurement duration; in which the first indication information indicates the start time of the measurement duration.

An embodiment of the present disclosure provides a measurement method, performed by a UE, including: determining the start time of the measurement duration based on a predefined mode.

For example, the UE and the network device may predefine the start time when the UE starts the measurement duration; or the communication protocol may predefine the start time when the UE starts the measurement duration. In this way, the UE may start the measurement duration at the start time based on the predefined mode.

An embodiment of the present disclosure provides a measurement method, performed by a UE, including: determining the start time of the measurement duration based on first indication information sent by a network device. Optionally, the first indication information indicates the start time of the measurement duration.

In some embodiments, the first indication information is carried in configuration information for transmission; or the first indication information and the configuration information are transmitted separately; or the first indication information is carried in a first signaling for transmission. Optionally, the first signaling includes one of: an RRC signaling, a MAC CE signaling, or DCI. Optionally, the first signaling may be a physical layer signaling or a higher-layer signaling.

For example, the UE receives the first indication information sent by the network device, and determines the start time of the measurement duration based on the first indication information. Optionally, the UE receives the configuration information and the first indication information sent by the network device respectively. Optionally, the configuration information is used to instruct the UE to start the measurement duration based on expiration of the validity duration of the location information obtained by GNSS. In this way, in this embodiment, the first indication information may be sent separately, so that the network device can also configure the start time of the measurement duration.

For example, the UE receives the configuration information sent by the network device, and the configuration information carries the first indication information; the UE determines the start time of the measurement duration based on the first indication information. Optionally, the configuration information is used to instruct the UE to start the measurement duration based on expiration of the validity duration of the location information obtained by GNSS. In this way, in this embodiment, the first indication information may be carried in the configuration information for transmission, so that the configuration information can be reused to save signaling overhead.

For example, the UE receives the first signaling sent by the network device, the first signaling carries the first indication information; the UE determines the start time of the measurement duration based on the first indication information. Thus, in this embodiment, the first indication information may be carried in the first signaling for transmission, so that the first signaling can be reused to save signaling overhead.

Accordingly, the embodiments of the present disclosure provide multiple ways to determine the start time of the measurement duration, which can realize flexible configuration of the start time and can be adapted to more application scenarios.

An embodiment of the present disclosure provides a measurement method, performed by a UE, including: determining a predetermined time. The predetermined time and the end time of the validity duration may be used to determine the start time of the measurement duration.

An embodiment of the present disclosure provides a measurement method, performed by a UE, including: determining a predetermined time based on a predefined mode. Optionally, the UE and the network device may predefine the predetermined time for determining the start time of the measurement duration; or the communication protocol may predefine the predetermined time for determining the start time of the measurement duration. In this way, the UE may determine the predetermined time for determining the start time of the measurement duration based on the predefined mode.

An embodiment of the present disclosure provides a measurement method, performed by a UE, including: determining a predetermined time based on second indication information. Optionally, the configuration information further includes the second indication information, in which the second indication information indicates the predetermined time. In this way, the second indication information may be carried in the configuration information for transmission, so that the configuration information can be reused to save signaling overhead.

An embodiment of the present disclosure provides a measurement method, performed by a UE, including: receiving a first signaling sent by the network device, in which the first signaling is used for determining the predetermined time. In this way, the predetermined time may be accurately determined through the first signaling.

In some embodiments, the first signaling further includes the second indication information, and the second indication information indicates the predetermined time. For example, the UE receives the first signaling sent by the network device, the first signaling includes the second indication information, and the second indication information indicates the predetermined time; the UE may determine the start time of starting the measurement duration based on the end time of the validity duration and the predetermined time. In this way, the first signaling may be reused to carry the second indication information, thereby saving signaling overhead.

In some embodiments, the first signaling is the second signaling, and the second signaling is used for the GNSS measurement related operation. Determining the start time of the measurement duration includes: determining the start time based on a time-domain resource position for sending the second signaling. Optionally, the second signaling includes one of: an RRC signaling, a MAC CE signaling, or DCI. Optionally, the second signaling is a target signaling. Optionally, the second signaling may be a physical layer signaling or a higher-layer signaling.

For example, the UE receives the second indication information, in which the second indication information indicates a predetermined time; the UE determines the predetermined time based on the second indication information, and the UE determines the start time of the measurement duration based on the predetermined time and the end time of the validity duration.

For example, the UE receives configuration information including the second indication information, in which the second indication information indicates a predetermined time; the UE determines the predetermined time based on the second indication information, and the UE determines the start time of the measurement duration based on the predetermined time and the end time of the validity duration.

For example, the UE receives a first signaling, the first signaling includes the second indication information, and the second indication information indicates a predetermined time; the UE determines the predetermined time based on the second indication information, and the UE determines the start time of the measurement duration based on the predetermined time and the end time of the validity duration.

For example, the UE receives the first signaling, the first signaling is a second signaling; the UE determines the start time based on a time-domain resource position for sending the second signaling.

For example, the UE receives the second signaling, and the second signaling is used for the GNSS measurement related operation; the UE determines the start time based on the time-domain resource position for sending the second signaling. For example, the time corresponding to the time-domain resource position for sending the second signaling is the start time of the measurement duration. In this way, the start time of the measurement duration can be accurately determined according to the time-frequency domain resource for the network device to send the second signaling.

Accordingly, the embodiments of the present disclosure provide multiple ways to determine the predetermined time, which can realize flexible configuration of the start time based on the predetermined time and can be adapted to more application scenarios.

It should be noted that those skilled in the art can understand that the method provided in the embodiments of the present disclosure may be executed alone or together with some methods in the embodiments of the present disclosure or some methods in related technologies.

As shown in FIG. 8, an embodiment of the present disclosure provides a measurement method. The method is performed by a UE, and includes the following steps.

At step S81, a validity period of a measurement duration is determined.

Optionally, the validity period is a difference between an end time and a start time of the measurement duration, i.e., a time length of the measurement duration.

In some embodiments of the present disclosure, the measurement duration may be the measurement duration in the above embodiments. For example, starting the measurement duration may refer to starting a timer or starting a measurement window.

In some embodiments, the step S81 includes one of:
determining the validity period of the measurement duration based on a predefined mode;
determining the validity period of the measurement duration based on third indication information sent by a network device;
determining the validity period of the measurement duration based on a third signaling sent by a network device, in which the third signaling indicates one time length or one time length set, the time length set includes at least one time length; or
determining the validity period of the measurement duration based on a GNSS duration reported by the UE.

An embodiment of the present disclosure provides a measurement method, performed by a UE, including: determining the validity period of the measurement duration based on a predefined mode.

For example, the UE and the network device may predefine the validity period of the measurement duration started by the UE; or the communication protocol may predefine the validity period of the measurement duration started by the UE. In this way, the UE may determine the validity period of the started measurement duration based on the predefined mode.

An embodiment of the present disclosure provides a measurement method, performed by a UE, including: determining the validity period of the measurement duration based on third indication information sent by a network device. Optionally, the third indication information indicates the validity period of the measurement duration. Optionally, the third indication information is carried in configuration information for transmission, or the third indication information and the configuration information are transmitted separately.

For example, the UE receives the third indication information, and the third indication information indicates the validity period of the measurement duration; the UE determines to start the measurement duration and the validity period of the measurement duration based on the configuration information and the third indication information. In this embodiment, the UE may receive the configuration information and the third indication information sent by the network device respectively. Optionally, the configuration information is used to instruct the UE to start the measurement duration based on expiration of a validity duration of location information obtained by GNSS. In this way, the third indication information can be sent separately, so that the network device can also configure the validity period of the measurement duration.

For example, the UE receives the configuration information sent by the network device, the configuration information carries the third indication information, and the third indication information indicates the validity period of the measurement duration; the UE determines the validity period of the measurement duration based on the third indication information. In this way, the third indication information can be carried by the configuration information, so that the configuration information can be reused to save signaling overhead.

An embodiment of the present disclosure provides a measurement method, performed by a UE, including: determining the validity period of the measurement duration based on a third signaling sent by a network device, in which the third signaling indicates one time length or one time length set, the time length set includes at least one time length.

In some embodiments, the method includes receiving a fourth signaling sent by the network device. The fourth signaling indicates a time length in a time length set. Determining the validity period of the measurement duration, includes: determining the validity period based on the time length indicated by the fourth signaling. Optionally, the third signaling includes one of: an RRC signaling, a MAC CE signaling, or DCI. Optionally, the fourth signaling includes one of: an RRC signaling, a MAC CE signaling, or DCI. Optionally, the third signaling or the fourth signaling may be a physical layer signaling or a higher-layer signaling.

For example, the UE receives the third signaling sent by the network device, the third signaling indicates a time length; the UE determines the validity period of the measurement duration based on the time length indicated by the third signaling. In this way, when the third signaling carries the time length, the time length can be directly determined as the validity period of the measurement duration.

For example, the UE receives the third signaling sent by the network device, the third signaling indicates a time length set, and the time length set includes at least one time length; the UE receives the fourth signaling sent by the network device, the fourth signaling indicates a time length in the time length set; the UE determines the validity period according to the time length indicated by the fourth signaling. For example, the third signaling indicates a time length set including N time lengths; the fourth signaling indicates a time length in the time length set as the validity period through N bits. For example, when the first bit of the N bits in the fourth signaling is "1", the first time length in the time length set is indicated as the validity period. In this way, a time length set can be carried in the third signaling, and information indicating a time length in the time length set can be carried in the fourth signaling, so that the validity period of the required measurement duration can be accurately determined.

For example, the UE receives the third signaling sent by the network device, and also determines a time length in a time length set as the validity period based on the time length set indicated by the third signaling. In this way, the validity period may be determined by the UE selecting multiple time length sets configured by the network device, which is conducive to meeting the user needs of the UE.

An embodiment of the present disclosure provides a measurement method, performed by a UE, including: determining the validity period of the measurement duration based on a GNSS duration reported by the UE. Optionally, the GNSS duration may be GNSS position fix time duration.

For example, if the UE determines that there is no predefined mode to determine the validity period and/or no network device configures the validity period for the UE, the UE determines the validity period based on the GNSS duration. Optionally, the GNSS duration is a time length used for a GNSS measurement related operation. Optionally, the GNSS duration may be the GNSS duration most recently reported by the UE.

In this way, in the embodiments of the present disclosure, if the UE determines that there is no predefined mode to determine the validity period of the measurement duration and/or no network device configures the validity period of the measurement duration for the UE, the UE may determine the validity period by itself, which is more conducive to meeting user needs.

It should be noted that those skilled in the art can understand that the method provided in the embodiments of the present disclosure may be executed alone or together with some methods in the embodiments of the present disclosure or some methods in related technologies.

As shown in FIG. 9, an embodiment of the present disclosure provides a measurement method. The method is performed by a UE, and includes the following steps.

At step S91, before an end time of a measurement duration, it is determined that the UE remains in an RRC connected state based on acquiring GNSS information; or before an end time of a measurement duration, it is determined that the UE is in an RRC idle state based on failure to acquire GNSS information.

In some embodiments, the GNSS information may include measurement information related to GNSS measurement. Optionally, the GNSS information includes a GNSS measurement result. Optionally, the GNSS information includes location information of the UE.

Thus, in the embodiments of the present disclosure, whether the UE is in the RRC connected state or the RRC idle state may be determined based on whether the GNSS information is acquired before the measurement duration expires, thereby reducing both the occurrence of service interruption of the UE and the UE's power consumption.

It should be noted that those skilled in the art can understand that the method provided in the embodiments of the present disclosure may be executed alone or together with some methods in the embodiments of the present disclosure or some methods in related technologies.

The following measurement method is performed by a network device, which is similar to the above-mentioned measurement method performed by the UE. For technical details not disclosed in the embodiments of the measurement method performed by the network device, reference may be made to the description of the measurement method performed by the UE, which will not be elaborated here.

As shown in FIG. 10, an embodiment of the present disclosure provides a measurement method. The method is performed by a network device, and includes the following steps.

At step S101, configuration information is sent to a UE, in which the configuration information is used to instruct the UE to perform a GNSS measurement related operation within a first time period based on expiration of a validity duration of acquired location information.

Optionally, the network device sends the configuration information to the UE, in which the configuration information is used to instruct the UE to start a measurement duration based on the expiration of the validity duration of the location information acquired by GNSS; the measurement duration is used for the UE to perform the GNSS measurement related operation before an end time of the measurement duration.

In some embodiments of the present disclosure, the UE and the network device may be the UE and the network device in the above-mentioned embodiments respectively; the measurement duration may be the measurement duration in the above-mentioned embodiments; the GNSS measurement related operation may be the GNSS measurement related operation in the above-mentioned embodiments; and the validity duration may be the validity duration in the above-mentioned embodiments.

For example, starting the measurement duration includes one of: starting a timer, or starting a measurement window.

For example, performing the GNSS measurement related operation includes at least one of: performing a GNSS measurement operation; not performing uplink data transmission or downlink data transmission; or not performing a measurement operation other than a GNSS measurement operation.

An embodiment of the present disclosure provides a measurement method, performed by a network device, including: sending first indication information to a UE, in which the first indication information indicates a start time of the measurement duration.

In some embodiments, the first indication information is carried in configuration information for transmission; or the first indication information and the configuration information are transmitted separately; or the first indication information is carried in a first signaling for transmission.

In some embodiments, the configuration information further includes second indication information, in which the second indication information indicates a predetermined time. For example, the network device sends the configuration information to the UE, the configuration information is used to instruct the UE to start the measurement duration based on the expiration of the validity duration of the location information acquired by GNSS; the configuration information further includes the second indication information, and the second indication information indicates the predetermined time.

An embodiment of the present disclosure provides a measurement method, performed by a network device, including: sending a first signaling to a UE, in which the first signaling is used to determine the predetermined time.

An embodiment of the present disclosure provides a measurement method, performed by a network device, including: sending a first signaling to a UE, in which the first signaling includes first indication information, and the first indication information indicates a start time of the measurement duration.

An embodiment of the present disclosure provides a measurement method, performed by a network device, including: sending a first signaling to a UE, in which the first signaling includes the second indication information, and the second indication information indicates the predetermined time.

An embodiment of the present disclosure provides a measurement method, performed by a network device, including: sending a first signaling to a UE, in which the first signaling is a second signaling used for the GNSS measurement related operation, and the second signaling is used for the UE to determine the start time based on a time-domain resource position for receiving the second signaling.

In some embodiments of the present disclosure, the predetermined time is the predetermined time in the above-mentioned embodiments; the first signaling and the second signaling are the first signaling and the second signaling in the above-mentioned embodiments, respectively.

For example, the predetermined time includes one of: a second duration, at least one time slot, or at least one symbol.

For example, the first signaling includes one of: an RRC signaling, a MAC CE signaling or DCI.

For example, the second signaling includes one of: an RRC signaling, a MAC CE signaling or DCI.

An embodiment of the present disclosure provides a measurement method, performed by a network device, including: sending third indication information to a UE, in which the third indication information indicates a validity period of the measurement duration.

In some embodiments, the third indication information is carried in configuration information for transmission; or the third indication information and the configuration information are transmitted separately. For example, the network device sends the configuration information to the UE, and the configuration information carries the third indication information. For example, the network device sends the configuration information and the third indication information to the UE, respectively.

An embodiment of the present disclosure provides a measurement method, performed by a network device, including: sending a third signaling to a UE, in which the third signaling indicates a time length, and the time length is used for the UE to determine the validity period of the measurement duration.

An embodiment of the present disclosure provides a measurement method, performed by a network device, including:
sending a third signaling to a UE, in which the third signaling indicates a time length set, and the time length set includes multiple time lengths; and
sending a fourth signaling to the UE, in which the fourth signaling indicates a time length in the time length set, and the time length indicated by the fourth signaling is used for the UE to determine the validity period of the measurement duration.

In some embodiments of the present disclosure, the third signaling and the fourth signaling are the third signaling and the fourth signaling in the above embodiments respectively.

For the above implementation methods, reference may be made to the description on the UE side for details, which will not be repeated here.

It should be noted that those skilled in the art can understand that the method provided in the embodiments of the present disclosure may be executed alone or together with some methods in the embodiments of the present disclosure or some methods in related technologies.

In order to further explain any embodiment of the present disclosure, several specific embodiments are provided below.

### Example 1

The measurement method involved in the embodiments of the present disclosure includes the following steps.

In some embodiments, the terminal determines that its GNSS validity duration has expired, and performs the following operations: the terminal starts a preconfigured or predefined timer, or the terminal determines a preconfigured or predefined measurement window. Optionally, the expiration of the GNSS validity duration may be expiration of a validity duration of location information obtained based on GNSS in the aforementioned embodiments.

In some embodiments, a starting position of the timer or the measurement window may be determined by one of the following methods.

Method 1, the starting position of the timer or the measurement window is an end position of the terminal's GNSS validity duration. In this method, the terminal determines that the GNSS validity duration has expired and immediately starts the timer or the measurement window.

Method 2, the starting position of the timer or the measurement window is a predefined time X after the end position of the terminal's GNSS validity duration. The unit of X may be an absolute time, such as X is 4ms; or the unit of X is a logical time, such as X is 4 slots. In this method, the terminal determines that the GNSS validity duration has expired and starts the timer or the measurement window after a delay of X. The value of X may be predefined or determined by receiving a higher-layer signaling such as RRC signaling, MAC CE or physical layer signaling such as DCI sent by the base station.

Optionally, the end position may be the end time in the aforementioned embodiments.

Method 3, the starting position of the timer or the measurement window is determined by the terminal receiving a higher-layer signaling such as RRC signaling, MAC CE or physical layer signaling such as DCI from the base station.

Optionally, the starting position is directly notified through a signaling from the base station, and the terminal determines the starting position of the timer or the measurement window based on indication information in the signaling.

Optionally, the starting position is determined based on a position where the base station sends a target signaling. For example, the target signaling is a MAC CE signaling sent by the base station for GNSS measurement, and the terminal starts the timer or the measurement window after a delay of X slots after the last transmission unit (sub-frame, time slot, etc.) where the MAC CE is transmitted. X may be predefined or configured by a higher-layer signaling. Optionally, the target signaling is the second signaling in the aforementioned embodiments.

**In** some embodiments, a length of the timer or the measurement window may be determined by one of the following methods.

The length of the timer or the measurement window may be the validity period of the timer or the measurement window in the aforementioned embodiments.

Method 1, the length of the timer or the measurement window is predefined. That is, after the terminal starts the timer, the validity period of the timer is predefined. Or, after the terminal starts the measurement window, the time of the measurement window is predefined.

Method 2, the length of the timer or the measurement window is determined by receiving a higher-layer signaling or physical layer signaling sent by the base station. The length information may be one length value determined from a length value set of multiple length values, or one determined length value which is directly notified. Optionally, the length value is the length time in the aforementioned embodiments; the length value set is the length time set in the aforementioned embodiments.

Method 3, in the absence of pre-definition or pre-configuration, the terminal determines the length as the GNSS position fix time duration reported by the terminal. The GNSS position fix time duration reported by the terminal is the GNSS position fix time duration reported most recently by the terminal.

In some embodiments, before the timer expires or the measurement window ends, the terminal may perform at least one of the following:
performing a GNSS measurement operation;
not performing any uplink/downlink data transmission, including but not limited to detecting a downlink control signaling, receiving downlink data, sending uplink data or uplink control signaling; or
not performing any measurement-related operation other than the GNSS measurement operation.

Optionally, the uplink/downlink data transmission may include the uplink data transmission or the downlink data transmission in the above embodiments. The expression "before the timer expires or the measurement window ends" may refer to before the end time of the timer or before the end time of the measurement window in the above embodiments.

In some embodiments, if the terminal successfully acquires GNSS information before the timer expires or the measurement window ends, the terminal will continue to remain in the connected state; otherwise, the terminal enters the IDLE state.

Optionally, the terminal in the embodiments of the present disclosure may be the UE in the aforementioned embodiments; the base station may be the network device in the aforementioned embodiments.

For the above implementation methods, reference may be made to the description on the UE side and/or the network device side for details, which will not be described in detail here.

It should be noted that those skilled in the art can understand that the method provided in the embodiments of the present disclosure may be executed alone or together with some methods in the embodiments of the present disclosure or some methods in related technologies.

### Example 2

An embodiment of the present disclosure provides an information processing system, including a UE and a network device.

The network device is configured to send configuration information to the UE, in which the configuration information is used to instruct the UE to perform a GNSS measurement related operation within a first time period based on expiration of a validity duration of location information acquired by GNSS.

The UE is configured to perform the GNSS measurement related operation within the first time period based on the expiration of the validity duration of the acquired location information.

**In** some embodiments, the network device is configured to send configuration information to the UE, in which the configuration information is used to instruct the UE to start a measurement duration based on the expiration of the validity duration of the location information acquired by GNSS.

The UE is configured to start the measurement duration based on the expiration of the validity duration of the location information acquired by GNSS, and perform the GNSS measurement related operation before an end time of the measurement duration.

**In** some embodiments, the UE is configured to start the measurement duration based on the expiration of the validity duration of the location information acquired by GNSS based on a predefined mode, and perform the GNSS measurement related operation before the end time of the measurement duration.

In some embodiments, the network device is configured to send first indication information to the UE, in which the first indication information indicates a start time of the measurement duration; and the UE is configured to determine the start time of the measurement duration based on the first indication information.

In some embodiments, the UE is configured to determine the start time of the measurement duration based on a predefined mode.

In some embodiments, the network device is configured to send third indication information to the UE, in which the third indication information indicates a validity period of the measurement duration; and the UE is configured to determine the validity period of the measurement duration based on the third indication information.

In some embodiments, the UE is configured to determine the validity period of the measurement duration based on a predefined mode.

For the above implementation methods, reference is made to the description on the UE side and/or the network device side for details, which will not be described in detail here.

It should be noted that those skilled in the art can understand that the method provided in the embodiments of the present disclosure may be executed alone or together with some methods in the embodiments of the present disclosure or some methods in related technologies.

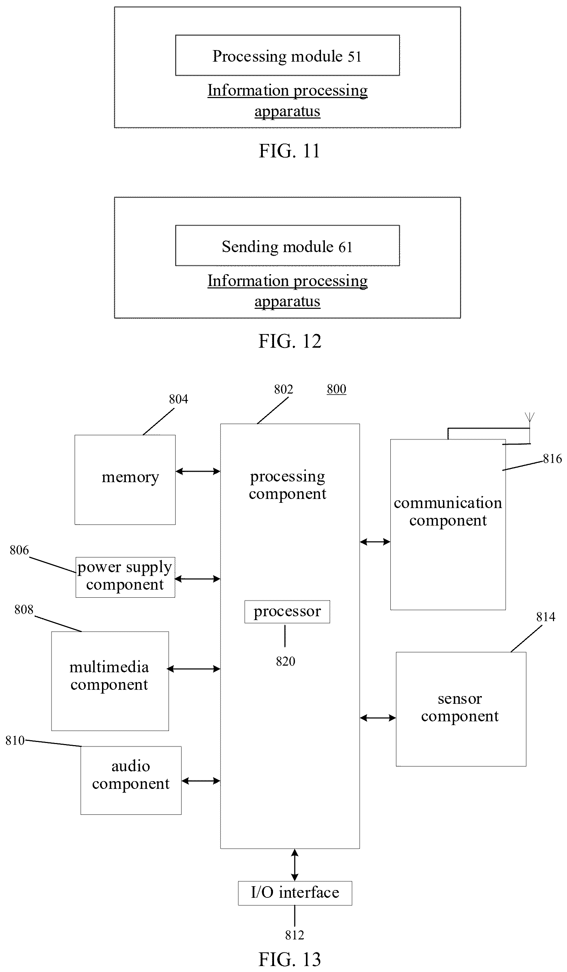

As shown in FIG. 11, an embodiment of the present disclosure provides a measurement apparatus including a processing module 51.

The processing module 51 is configured to perform a GNSS measurement related operation within a first time period based on expiration of a validity duration of acquired location information.

An embodiment of the present disclosure provides a measurement apparatus including a processing module 51, configured to:
start a measurement duration based on the expiration of the validity duration of the location information acquired by GNSS;
perform a GNSS measurement related operation before an end time of a measurement duration.

The measurement apparatus provided in the embodiments of the present disclosure may be a UE.

In some embodiments, starting the measurement duration comprises one of: starting a timer; or starting a measurement window.

In some embodiments, the processing module is configured to perform at least one of:
performing a GNSS measurement operation;
not performing uplink data transmission or downlink data transmission; or
not performing a measurement operation other than a GNSS measurement operation.

An embodiment of the present disclosure provides a measurement apparatus, including a processing module 51, configured to start the measurement duration based on a predefined mode.

An embodiment of the present disclosure provides a measurement apparatus, including:
a receiving module configured to receive configuration information sent by a network device, in which the configuration information is configured to instruct the UE to perform the GNSS measurement related operation within the first time period based on the expiration of the validity duration of the acquired location information;
a processing module, configured to perform the GNSS measurement related operation within the first time period.

An embodiment of the present disclosure provides a measurement apparatus, including:
a receiving module configured to receive configuration information sent by a network device, in which the configuration information indicates the expiration of the validity duration and starting of the measurement duration;
a processing module configured to start the measurement duration based on the configuration information.

An embodiment of the present disclosure provides a measurement apparatus, including: a processing module 51 configured to determine a start time of the measurement duration.

In some embodiments, the start time is one of:
an end time of the validity duration; or
a predetermined time after an end time of the validity duration.

In some embodiments, the predetermined time includes one of: a second time period; at least one time slot; or at least one symbol.

An embodiment of the present disclosure provides a measurement apparatus, including: a processing module 51 configured to determine the start time of the measurement duration based on a predefined mode.

An embodiment of the present disclosure provides a measurement apparatus, including: a processing module 51 configured to determine the start time of the measurement duration based on first indication information sent by a network device, in which the first indication information indicates the start time of the measurement duration.

In some embodiments, the first indication information is carried in the configuration information for transmission, or the first indication information and the configuration information are transmitted separately, or the first indication information is carried in a first signaling for transmission.

In some embodiments, the configuration information further includes second indication information for indicating the predetermined time.

An embodiment of the present disclosure provides a measurement apparatus, including: a receiving module configured to receive a first signaling sent by a network device, in which the first signaling is used to determine the predetermined time.

**In** some embodiments, the first signaling further includes second indication information for indicating the predetermined time.

In some embodiments, the first signaling is a second signaling used for the GNSS measurement related operation.

An embodiment of the present disclosure provides a measurement apparatus, including: a processing module 51 configured to determine the start time based on a time-domain resource position for sending the second signaling.

In some embodiments, the first signaling comprises one of: an RRC signaling, a MAC CE signaling, or DCI; and/or the second signaling comprises one of: an RRC signaling, a MAC CE signaling, or DCI.

An embodiment of the present disclosure provides a measurement apparatus, including: a processing module 51 configured to determine a validity period of a measurement duration.

An embodiment of the present disclosure provides a measurement apparatus, including: a processing module 51 configured to perform one of:
determining the validity period of the measurement duration based on a predefined mode;
determining the validity period of the measurement duration based on third indication information sent by a network device;
determining the validity period of the measurement duration based on a third signaling sent by a network device, in which the third signaling indicates one time length or one time length set, the time length set comprises at least one time length; or
determining the validity period of the measurement duration based on a GNSS duration reported by the UE.

In some embodiments, the third indication information is carried in the configuration information for transmission, or the third indication information and the configuration information are transmitted separately.

An embodiment of the present disclosure provides a measurement apparatus, including:
a receiving module, configured to receive a fourth signaling sent by the network device, in which the fourth signaling indicates one time length in the time length set;
a processing module 51, configured to determine the validity period based on the time length indicated by the fourth signaling.

An embodiment of the present disclosure provides a measurement apparatus, including: a processing module 51 configured to perform one of:
determining that the UE remains in an RRC connected state based on acquisition of GNSS information before an end time of a measurement duration; or
determining that the UE is in an RRC idle state based on a failure to acquire GNSS information before an end time of a measurement duration.

As shown in FIG. 12, an embodiment of the present disclosure provides a measurement apparatus including a sending module 61.

The sending module 61 is configured to send configuration information to a user equipment (UE), in which the configuration information instructs the UE to perform a global navigation satellite system (GNSS) measurement related operation within a first time period based on expiration of a validity duration of acquired location information.

The measurement apparatus provided by the embodiments of the present disclosure may be a network device.

In some embodiments, starting the measurement duration includes one of:
starting a timer; or
starting a measurement window.

In some embodiments, performing the GNSS measurement related operation includes at least one of:
performing a GNSS measurement operation;
not performing uplink data transmission or downlink data transmission; or
not performing a measurement operation other than a GNSS measurement operation.

An embodiment of the present disclosure provides a measurement apparatus including: a sending module 61 configured to send first indication information to the UE, in which the first indication information indicates a start time of a measurement duration.

In some embodiments, the first indication information is carried in the configuration information for transmission, or the first indication information and the configuration information are transmitted separately, or the first indication information is carried in a first signaling for transmission.

In some embodiments, the configuration information further includes second indication information for indicating a predetermined time.

An embodiment of the present disclosure provides a measurement apparatus including: a sending module 61 configured to send a first signaling to the UE, in which the first signaling is used to determine a predetermined time.

In some embodiments, the first signaling further includes second indication information for indicating the predetermined time.

In some embodiments, the sending module is configured to send a first signaling to the UE, in which the first signaling is a second signaling used for the GNSS measurement related operation, the second signaling is used for the UE to determine a predetermined time based on a time-domain resource position for receiving the second signaling.

In some embodiments, the predetermined time includes one of:
a second time period;
at least one time slot; or
at least one symbol.

In some embodiments, the first signaling includes one of: an RRC signaling, a MAC CE signaling, or DCI; and/or the second signaling includes one of: an RRC signaling, a MAC CE signaling, or DCI.

An embodiment of the present disclosure provides a measurement apparatus including: a sending module 61 configured to send third indication information to the UE, in which the third indication information indicates a validity period of a measurement duration.

In some embodiments, the third indication information is carried in the configuration information for transmission, or the third indication information and the configuration information are transmitted separately.

An embodiment of the present disclosure provides a measurement apparatus including: a sending module 61 configured to send a third signaling to the UE, in which the third signaling indicates one time length, the time length is used for the UE to determine a validity period of a measurement duration.

An embodiment of the present disclosure provides a measurement apparatus including: a sending module 61 configured to:
send a third signaling to the UE, in which the third signaling indicates one time length set, the time length set includes a plurality of time lengths; and
send a fourth signaling to the UE, in which the fourth signaling indicates one time length in the time length set, and the time length indicated by the fourth signaling is used for the UE to determine a validity period of a measurement duration.

It should be noted that those skilled in the art can understand that the apparatus provided in the embodiments of the present disclosure may be executed alone or together with some apparatuses in the embodiments of the present disclosure or some apparatuses in related technologies.

Regarding the apparatus in the above embodiments, the specific manner in which each module performs operations has been described in detail in the embodiments of the method, which will not be elaborated here.

An embodiment of the present disclosure provides a communication device, including a processor, a transceiver, a memory, and an executable program stored in the memory and executable by the processor. The processor executes the measurement method provided above when running the executable program.

In some embodiments, the processor may include various types of storage media, which may be non-temporary computer storage media that can continue to memorize information stored thereon after the user device loses power.

In some embodiments, the communication device includes: a UE or a network device.

The processor may be connected to the memory via a bus or the like, and may be used to read an executable program stored in the memory, for example, at least one of the methods shown in FIG. 4, FIG. 5, and FIG. 8 to FIG. 10.

An embodiment of the present disclosure provides a computer storage medium having an executable program stored thereon. After the executable program is executed by a processor, the measurement method described above is implemented, for example, at least one of the methods shown in FIG. 4, FIG. 5, and FIG. 8 to FIG. 10.

FIG. 13 is a schematic block diagram of a UE 800 according to an embodiment of the present disclosure. For example, the UE 800 may be a mobile phone, a computer, a digital broadcasting terminal, a message transceiver device, a gaming console, a tablet device, a medical device, a fitness device, a personal digital assistant, etc.

Referring to FIG. 13, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as operations associated with displays, telephone calls, data communications, camera operations, and recording operations. The processing component 802 may include one or more processors 820 to execute instructions to accomplish all or some of the steps of the method described above. Additionally, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the UE 800. Examples of such data include instructions for any application or method operated on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to the various components of the UE 800. The power supply component 806 may include a power management system, one or more power supplies, and other components associated with generating, managing, and distributing power for the UE 800.

The multimedia component 808 includes a screen providing an output interface between the UE 800 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC) that is configured to receive external audio signals when the UE 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the UE 800. For example, the sensor component 814 can detect the open/closed state of the UE 800, the relative positioning of components, such as the display and keypad of the UE 800, and the sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 816 is configured to facilitate communication between the UE 800 and other devices by wired or wireless means. The UE 800 may access a wireless network based on a communication standard, such as Wi-Fi, 2G or 3G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the UE 800 for accomplishing the above-described method. For example, the non-transitory computer-readable storage medium may be a ROM, a random access memory (RAM), a CD-ROM, a magnetic tape, floppy disks, and optical data storage devices, etc.

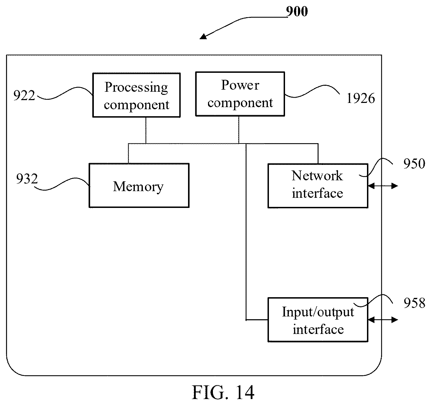

As shown in FIG. 14, an embodiment of the present disclosure shows a structure of a communication device. The communication device 900 may be provided as a network side above. The communication device may be various network elements such as the aforementioned access network element and/or network function. The communication device may be a UE or a network device in the above-mentioned embodiments.

Referring to FIG. 14, the communication device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the access device.

**The** communication device 900 may also include a power supply component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS X TM, Unix TM, Linux TM, FreeBSD TM or the like.

In the absence of contradiction, each step in a certain implementation mode or example can be implemented as an independent example, and the steps can be arbitrarily combined. For example, a solution after removing some steps in a certain implementation mode or example may also be implemented as an independent example, and the order of the steps in a certain implementation mode or example may be arbitrarily exchanged. In addition, the optional methods or optional examples in a certain implementation mode or example can be arbitrarily combined; in addition, the various implementation modes or examples may be arbitrarily combined. For example, some or all steps of different implementation modes or examples may be arbitrarily combined, and a certain implementation mode or example may be arbitrarily combined with the optional methods or optional examples of other implementation modes or examples.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A measurement method, performed by a user equipment (UE), comprising:
performing a global navigation satellite system (GNSS) measurement related operation within a first time period based on expiration of a validity duration of acquired location information.

2. The method of claim 1, wherein performing the GNSS measurement related operation within the first time period comprises:
starting a measurement duration; and
performing the GNSS measurement related operation before an end time of the measurement duration.

3. The method of claim 2, wherein starting the measurement duration comprises one of:
starting a timer; or
starting a measurement window.

4. The method of any of claims 1-3, wherein performing the GNSS measurement related operation comprises at least one of:
performing a GNSS measurement operation;
not performing uplink data transmission or downlink data transmission; or
not performing a measurement operation other than a GNSS measurement operation.

5. The method of claim 2 or 3, wherein starting the measurement duration comprises:
starting the measurement duration based on a predefined mode.

6. The method of claim 2 or 3, further comprising:
receiving configuration information sent by a network device, wherein the configuration information indicates the expiration of the validity duration and starting of the measurement duration;
wherein starting the measurement duration comprises: starting the measurement duration based on the configuration information.

7. The method of any of claims 2-6, further comprising:
determining a start time of the measurement duration.

8. The method of claim 7, wherein the start time is one of:
an end time of the validity duration; or
a predetermined time after an end time of the validity duration.

9. The method of claim 8, wherein the predetermined time comprises one of:
a second time period;
at least one time slot; or
at least one symbol.

10. The method of any of claims 7-9, wherein determining the start time of the measurement duration comprises one of:
determining the start time of the measurement duration based on a predefined mode; or
determining the start time of the measurement duration based on first indication information sent by a network device, wherein the first indication information indicates the start time of the measurement duration.

11. The method of claim 10, wherein the first indication information is carried in the configuration information for transmission, or the first indication information and the configuration information are transmitted separately, or the first indication information is carried in a first signaling for transmission.

12. The method of claim 7 or 11, wherein the configuration information further comprises second indication information for indicating a predetermined time.

13. The method of claim 7 or 11, further comprising:
receiving a first signaling sent by a network device, wherein the first signaling is used to determine the predetermined time.

14. The method of claim 13, wherein the first signaling further comprises second indication information for indicating the predetermined time.

15. The method of claim 7, further comprising:
receiving a first signaling sent by a network device, wherein the first signaling is a second signaling used for the GNSS measurement related operation;
wherein determining the start time of the measurement duration comprises: determining the start time based on a time-domain resource position for sending the second signaling.

16. The method of claim 15, wherein
the first signaling comprises one of: a radio resource control (RRC) signaling, a media access control control element (MAC CE) signaling, or downlink control information (DCI);
and/or
the second signaling comprises one of: an RRC signaling, a MAC CE signaling, or DCI.

17. The method of any of claims 1-16, further comprising:
determining a validity period of a measurement duration.

18. The method of claim 17, wherein determining the validity period of the measurement duration comprises one of:
determining the validity period of the measurement duration based on a predefined mode;
determining the validity period of the measurement duration based on third indication information sent by a network device;
determining the validity period of the measurement duration based on a third signaling sent by a network device, wherein the third signaling indicates one time length or one time length set, the time length set comprises at least one time length; or
determining the validity period of the measurement duration based on a GNSS duration reported by the UE.

19. The method of claim 18, wherein the third indication information is carried in configuration information for transmission, or the third indication information and configuration information are transmitted separately.

20. The method of claim 19, further comprising:
receiving a fourth signaling sent by the network device, wherein the fourth signaling indicates one time length in the time length set;
wherein determining the validity period of the measurement duration comprises: determining the validity period based on the time length indicated by the fourth signaling.

21. The method of any of claims 1-20, further comprising one of:
determining that the UE remains in an RRC connected state based on acquisition of GNSS information before an end time of a measurement duration; or
determining that the UE is in an RRC idle state based on a failure to acquire GNSS information before an end time of a measurement duration.

22. A measurement method, performed by a network device, comprising:
sending configuration information to a user equipment (UE), wherein the configuration information instructs the UE to perform a global navigation satellite system (GNSS) measurement related operation within a first time period based on expiration of a validity duration of acquired location information.

23. The method of claim 22, further comprising:
sending first indication information to the UE, wherein the first indication information indicates a start time of a measurement duration.

24. The method of claim 23, wherein the first indication information is carried in the configuration information for transmission, or the first indication information and the configuration information are transmitted separately, or the first indication information is carried in a first signaling for transmission.

25. The method of claim 22 or 24, wherein the configuration information further comprises second indication information for indicating a predetermined time.

26. The method of claim 22 or 24, further comprising:
sending a first signaling to the UE, wherein the first signaling is used to determine a predetermined time.

27. The method of claim 26, wherein the first signaling further comprises second indication information for indicating the predetermined time.

28. The method of claim 22, further comprising:
sending a first signaling to the UE, wherein the first signaling is a second signaling used for the GNSS measurement related operation, the second signaling is used for the UE to determine a start time based on a time-domain resource position for receiving the second signaling.

29. The method of any of claims 26-27, wherein the predetermined time comprises one of:
a second time period;
at least one time slot; or
at least one symbol.

30. The method of claim 28, wherein
the first signaling comprises one of: a radio resource control (RRC) signaling, a media access control control element (MAC CE) signaling, or downlink control information (DCI);
and/or
the second signaling comprises one of: an RRC signaling, a MAC CE signaling, or DCI.

31. The method of any of claims 22-30, further comprising:
sending third indication information to the UE, wherein the third indication information indicates a validity period of a measurement duration.

32. The method of claim 31, wherein the third indication information is carried in the configuration information for transmission, or the third indication information and the configuration information are transmitted separately.

33. The method of any of claims 22-32, further comprising:
sending a third signaling to the UE, wherein the third signaling indicates one time length, the time length is used for the UE to determine a validity period of a measurement duration.

34. The method of any of claims 22-32, further comprising:
sending a third signaling to the UE, wherein the third signaling indicates one time length set, the time length set comprises a plurality of time lengths; and
sending a fourth signaling to the UE, wherein the fourth signaling indicates one time length in the time length set, and the time length indicated by the fourth signaling is used for the UE to determine a validity period of a measurement duration.

35. A measurement apparatus, comprising:
a processing module, configured to perform a global navigation satellite system (GNSS) measurement related operation within a first time period based on expiration of a validity duration of acquired location information.

36. A measurement apparatus, comprising:
a sending module, configured to send configuration information to a user equipment (UE), wherein the configuration information instructs the UE to perform a global navigation satellite system (GNSS) measurement related operation within a first time period based on expiration of a validity duration of acquired location information.

37. A measurement system, comprising a user equipment (UE) and a network device, wherein
the network device is configured to send configuration information to the UE, wherein the configuration information instructs the UE to perform a global navigation satellite system (GNSS) measurement related operation within a first time period based on expiration of a validity duration of acquired location information; and
the UE is configured to perform the GNSS measurement related operation within the first time period based on expiration of the validity duration of the acquired location information.

38. A communication device, comprising a processor, a transceiver, a memory, and an executable program stored on the memory and executable by the processor, wherein the processor is configured to perform the measurement method of any one of claims 1 to 21, or 22-34 when executing the executable program.

39. A computer storage medium for storing an executable program, wherein when the executable program is executed by a processor, the measurement method of any one of claims 1 to 21, or 22-34 is implemented.
